# EUROPEAN PATENT APPLICATION

(11) **EP 4 794 374 A1**
(43) Date of publication of application: **19.08.2026**
(21) Application number: 25382119.3
(22) Date of filing: 12.02.2025
(51) Int. Cl.: H04W 24/02

(54) **GROUPING WIRELESS ACCESS POINTS**

(71) Applicant: Nokia Solutions and Networks Oy, 02610 Espoo (FI)
(72) Inventor: Fernandez Duran, Alfonso, 28229 Madrid (ES); Fortes Rodriguez, Sergio, 29006 Malaga (ES); Pulido Alegre, Jose, 29190 Malaga (ES)
(74) Representative: Kolster Oy Ab

(57) **Abstract**

Disclosed is a method comprising collecting at least one of: radio measurement information or location information associated with a plurality of wireless access points; determining, per pair of wireless access points from the plurality of wireless access points, an electromagnetic attenuation between the pair of wireless access points; comparing, per pair of wireless access points from the plurality of wireless access points, the electromagnetic attenuation between the pair of wireless access points to a pre-defined isolation threshold; grouping the plurality of wireless access points into one or more groups based on the comparison and based on the pre-defined isolation threshold; and, based on determining that the number of wireless access points in a group exceeds a pre-defined limit, repeating the comparing and the grouping for splitting the group into two or more subgroups by lowering the pre-defined isolation threshold.

## Description

### FIELD

The following example embodiments relate to wireless communication.

### BACKGROUND

As the demand for high-capacity and reliable wireless connectivity continues to grow, it is desirable to ensure optimal performance of wireless networks.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided a computer-implemented method for controlling a wireless network, the computer-implemented method comprising: collecting at least one of: radio measurement information or location information associated with a plurality of wireless access points comprised in the wireless network; determining, per pair of wireless access points from the plurality of wireless access points, an electromagnetic attenuation between the pair of wireless access points, wherein the determination is based on the at least one of: the radio measurement information or the location information; comparing, per pair of wireless access points from the plurality of wireless access points, the electromagnetic attenuation between the pair of wireless access points to a pre-defined isolation threshold, wherein the pre-defined isolation threshold indicates a level of electromagnetic attenuation above which the pair of wireless access points is considered to be electromagnetically isolated from each other; grouping the plurality of wireless access points into one or more groups based on the comparison and based on the pre-defined isolation threshold; determining whether a number of wireless access points in a group of wireless access points from the one or more groups exceeds a pre-defined limit; and based on determining that the number of wireless access points in the group exceeds the pre-defined limit, repeating the comparing and the grouping for splitting the group into two or more subgroups by lowering the pre-defined isolation threshold.

According to a second aspect, there is provided the computer-implemented method of the first aspect, wherein the electromagnetic attenuation is determined based at least on a received signal strength of a signal received by a wireless access point of the pair of wireless access points from another wireless access point of the pair of wireless access points, wherein the received signal strength is indicated in the radio measurement information.

According to a third aspect, there is provided the computer-implemented method of the first or second aspect, wherein the electromagnetic attenuation is determined based at least on a distance between the pair of wireless access points by using a radio propagation model configured to determine the electromagnetic attenuation as a function of the distance, wherein the distance is indicated by the location information.

According to a fourth aspect, there is provided the computer-implemented method of any preceding aspect, wherein the grouping comprises: assigning a group label to a wireless access point of the plurality of wireless access points based on the comparison of the electromagnetic attenuation to the pre-defined isolation threshold.

According to a fifth aspect, there is provided the computer-implemented method of the fourth aspect, wherein the assignment of the group label comprises: determining whether one or more neighboring wireless access points of the wireless access point have been assigned with a group label; and assigning the group label of the one or more neighboring wireless access points to the wireless access point, based on determining that the one or more neighboring wireless access points have been assigned with the group label, and based on the electromagnetic attenuation between the wireless access point and the one or more neighboring wireless access points being below the pre-defined isolation threshold.

According to a sixth aspect, there is provided the computer-implemented method of the fourth aspect, wherein the assignment of the group label comprises: determining whether one or more neighboring wireless access points of the wireless access point have been assigned with a group label; creating a new group label based on determining that the one or more neighboring wireless access points have not been assigned with the group label; and assigning the new group label to the wireless access point and to the one or more neighboring wireless access points, based on the electromagnetic attenuation between the wireless access point and the one or more neighboring wireless access points being below the pre-defined isolation threshold.

According to a seventh aspect, there is provided the computer-implemented method of the fourth aspect, wherein the assignment of the group label comprises: determining whether the electromagnetic attenuation between the wireless access point and one or more neighboring wireless access points is below the pre-defined isolation threshold; creating a new group label for the wireless access point, based on determining that the electromagnetic attenuation between the wireless access point and the one or more neighboring wireless access points is not below the pre-defined isolation threshold; and assigning the new group label to the wireless access point.

According to an eighth aspect, there is provided the computer-implemented method of any preceding aspect, wherein the plurality of wireless access points is represented as a list of wireless access points, wherein the computer-implemented method further comprises: sorting the list of wireless access points in ascending or descending order of distance from a pre-defined geographic point for the grouping.

According to a ninth aspect, there is provided the computer-implemented method of the eighth aspect, wherein the grouping comprises applying a sliding window to the list for limiting a number of wireless access points considered for each group to a pre-defined number of nearest neighboring wireless access points.

According to a tenth aspect, there is provided the computer-implemented method of any preceding aspect, wherein the pre-defined isolation threshold is less than or equal to 100 decibels.

According to an eleventh aspect, there is provided the computer-implemented method of any preceding aspect, wherein the lowering of the pre-defined isolation threshold is restricted by a minimum isolation threshold for preventing the pre-defined isolation threshold from being lowered below the minimum isolation threshold, wherein the minimum isolation threshold is greater than or equal to 80 decibels.

According to a twelfth aspect, there is provided the computer-implemented method of any preceding aspect, wherein the pre-defined limit is greater than or equal to 100 wireless access points.

According to a thirteenth aspect, there is provided the computer-implemented method of any preceding aspect, further comprising: applying one or more channel configurations to one or more wireless access points of at least one subgroup from the two or more subgroups.

According to a fourteenth aspect, there is provided an apparatus comprising at least one processor, and at least one memory storing instructions that, when executed by the at least one processor, cause the apparatus at least to perform the computer-implemented method of any of the first to thirteenth aspects.

According to a fifteenth aspect, there is provided a computer program comprising instructions for performing at least the computer-implemented method of any of the first to thirteenth aspects. The computer program may be downloadable and is not restricted to instructions stored on a medium.

According to a sixteenth aspect, there is provided a computer program comprising instructions which, when executed by an apparatus, cause the apparatus to perform at least the computer-implemented method of any of the first to thirteenth aspects. The computer program may be downloadable and is not restricted to instructions stored on a medium.

According to a seventeenth aspect, there is provided a non-transitory computer readable medium comprising instructions stored thereon for performing at least the computer-implemented method of any of the first to thirteenth aspects.

According to an eighteenth aspect, there is provided a non-transitory computer readable medium comprising instructions which, when executed by an apparatus, cause the apparatus to perform at least the computer-implemented method of any of the first to thirteenth aspects.

According to a nineteenth aspect, there is provided a computer readable medium comprising instructions stored thereon which, when executed by a processor, perform at least the computer-implemented method of any of the first to thirteenth aspects.

According to a twentieth aspect, there is provided a computer program product comprising instructions that, when executed by a processor, perform at least the computer-implemented method of any of the first to thirteenth aspects.

According to a twenty-first aspect, there is provided an apparatus comprising means for causing the apparatus to perform at least the computer-implemented method of any of the first to thirteenth aspects.

### BRIEF DESCRIPTION OF THE DRAWINGS

In the following, various example embodiments will be described in greater detail with reference to the accompanying drawings, in which
FIG. 1 illustrates an example of a wireless local area network;
FIG. 2 illustrates an example of grouping wireless access points;
FIG. 3 illustrates an example of subgrouping wireless access points;
FIG. 4 illustrates a block diagram;
FIG. 5 illustrates a flow chart;
FIG. 6 illustrates a flow chart;
FIG. 7 illustrates a flow chart;
FIG. 8 illustrates an additional block of a flow chart;
FIG. 9 illustrates an example of a list of wireless access points;
FIG. 10 illustrates an additional block of a flow chart;
FIG. 11A illustrates an example of a grouping of wireless access points achieved with k-means;
FIG. 11B illustrates an example of a grouping of wireless access points achieved with an example embodiment;
FIG. 12A illustrates an example of an initial group of wireless access points;
FIG. 12B illustrates an example of splitting the initial group of wireless access points into smaller subgroups;
FIG. 13 illustrates a sample statistical distribution of group sizes in a wireless network; and
FIG. 14 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

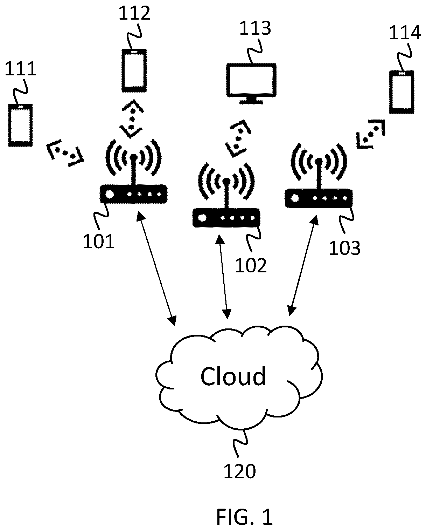

FIG. 1 illustrates a simplified example of a wireless local area network (WLAN). It is apparent to a person skilled in the art that the WLAN may also comprise other physical and logical entities than those shown in FIG. 1.

A WLAN is a type of wireless network based on the Institute of Electrical and Electronics Engineers (IEEE) 802.11 standards. WLANs use wireless communication (i.e., radio signals) to connect terminal devices 111, 112, 113, 114 within a limited area, such as a home, school, or office building. This allows users to move around within the coverage area while maintaining a network connection. A WLAN may include one or more wireless access points (APs) 101, 102, 103 for connecting one or more terminal devices 111, 112, 113, 114 to the internet (e.g., to the cloud 120). The terminal devices 111, 112, 113,114 may also be referred to as stations (STAs).

A wireless access point 101, 102, 103 is a device that allows one or more terminal devices 111, 112, 113, 114 (e.g., laptops, personal computers, smartphones, tablet computers, or printers) to connect to the wireless network. The wireless access point acts as a central transmitter and receiver of wireless radio signals, facilitating communication between the terminal devices and the internet, for example.

For example, Wi-Fi is one type of WLAN (but not all WLANs use Wi-Fi technology). In other words, WLAN refers to the general concept of a wireless local area network, while Wi-Fi is a specific implementation of that concept.

WLANs occupy a dominant position in the provision of wireless internet access. WLAN access points are widely and densely deployed in public places, offices and residential areas. However, there is a challenge in how to ensure that the deployed WLANs have enough capacity to meet the growing data traffic demands, given the significant increase in the amount of data traffic transmitted to and received from the internet.

A significant percentage of broadband customers' complaints are related to the quality of communications over WLANs. Many of these complaints and the customer perception can be improved by having WLANs properly configured and parameterized. The configuration and parameterization may change over time depending on the internal conditions of the network and the surrounding environment. For example, these changes may occur in networks that have been deployed by the users themselves.

Fixed broadband access may end in a wireless access point that provides the network and internet connectivity to the subscribers (or stations). Thus, WLANs may be used in the provision of fixed broadband access services. WLANs have several features that are beneficial for the user experience.

One such beneficial feature is mobility within premises. WLANs enable users to access the internet from anywhere within the range of the wireless access point, providing flexibility and mobility. This may be useful, for example, in homes with multiple rooms and floors, or in office settings where employees may move around frequently.

Furthermore, WLANs eliminate the need for extensive wiring and cabling for each terminal device that requires internet access. This reduces installation costs and makes it easier to add new devices to the network.

Moreover, WLANs may support high-bandwidth applications. For example, modern Wi-Fi standards (e.g., Wi-Fi 6 and the upcoming Wi-Fi 7) offer high speeds and low latency, which may be required for applications that require significant bandwidth (e.g., video streaming, online gaming, and video conferencing).

Additionally, WLANs enable integration with smart home devices. WLANs are the backbone for many smart home devices, from smart thermostats and security cameras to voice assistants and lighting systems. A robust WLAN ensures that these devices can function seamlessly and be managed centrally.

Also, with respect to scalability, WLANs can be easily scaled up by adding more access points to extend coverage and accommodate more users and devices. For example, this scalability may be needed by growing families and expanding businesses.

Overall, WLANs are an integral component of fixed broadband access services for service providers. However, the popularity of WLANs (e.g., Wi-Fi networks) and the fact that they operate in unlicensed bands has introduced some drawbacks.

One such drawback is interference and signal degradation. For example, in terms of environmental interference, WLAN signals may be affected by physical obstacles such as walls, floors, and furniture, which may degrade signal strength and quality. Due to the unlicensed nature, other electronic devices and appliances, like microwaves and cordless phones, may also cause interference impacting WLAN performance.

Another drawback is network congestion. For example, in densely populated areas or environments with many Wi-Fi networks, congestion can occur due to overlapping channels and frequency bands, leading to slower speeds and dropped connections.

To maintain the advantages of WLANs and reduce the effects of the drawbacks on the end user experience, cloud-managed WLAN solutions may be applied. However, managing WLANs from the cloud 120 introduces several technology challenges. One such challenge is how to manage large networks (e.g., scaling up to millions of subscribers and therefore APs).

To address the optimization of large WLANs (e.g., with millions of subscribers), it may be necessary to partition the network into smaller pieces, called groups or clusters. To ensure that the optimization of each group of APs does not affect the surrounding ones (or at least to reduce the electromagnetic interaction between the groups), it would be beneficial to select each group of APs based on the electromagnetic isolation with respect to other groups of APs. Electromagnetic isolation refers to minimizing interference between multiple APs operating in close proximity.

In other words, the different partitions of the network (i.e., groups or clusters) that are optimized separately should be fundamentally independent, such that any change in the configuration of one group does not substantially degrade the performance of other groups. However, the currently available grouping techniques (clustering techniques), such as k-means or hierarchical agglomerative clustering (HAC), are more focused on size uniformity or geographical split.

Therefore, there is a need for a grouping technique (clustering technique) that is capable of ensuring electromagnetic isolation among the groups of APs by using the isolation level as an input parameter.

To address this need, some example embodiments provide such a grouping method. For example, in some example embodiments, a group label may be added to each wireless access point from a list of wireless access points. In this description, the terms "group" and "cluster" may be used interchangeably.

The example embodiments described herein may ensure that all groups of APs have electromagnetic isolation level between them (or at least that the electromagnetic interaction between the groups is reduced). Furthermore, the example embodiments enable efficient clustering of large wireless networks, as well as adding a new node (i.e., AP) to a group very quickly.

Furthermore, the example embodiments provide subclustering capabilities, while keeping the clustering properties hierarchically. A large group of APs can be defined with a very restrictive isolation threshold (e.g., 100 decibels), and subgroups with lower isolation (e.g., 80 decibels) are subsets of the larger groups. For some optimization steps, subclustering from a larger group or cluster into smaller ones may be beneficial (while keeping the original properties of the larger parent group).

It should be noted that WLAN is just one example of a wireless network, and the embodiments are not limited to WLAN. A person skilled in the art may also apply the proposed concept to any other wireless communication networks or systems that are not centrally controlled and/or where resources are shared among different networks.

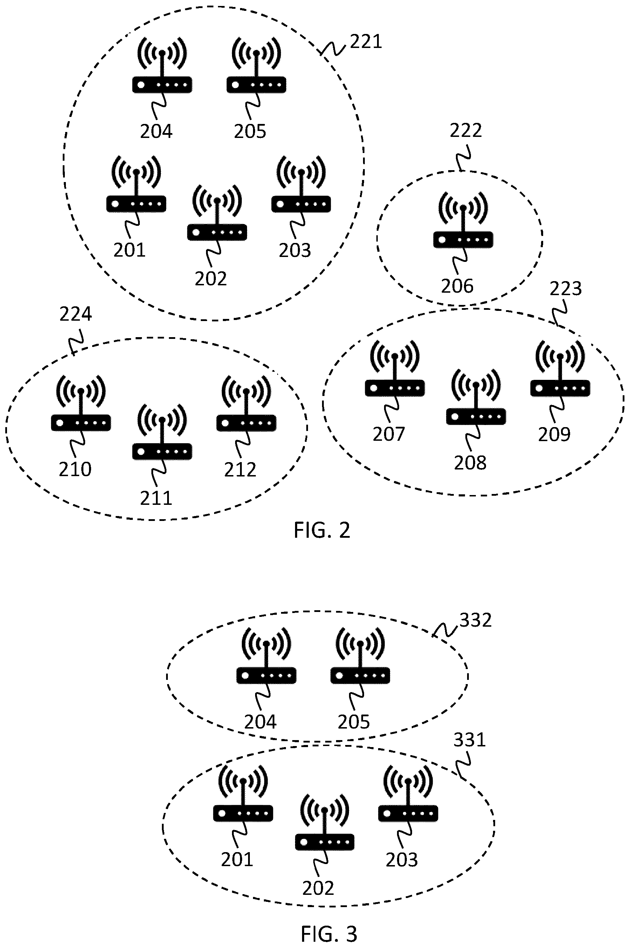

FIG. 2 illustrates a simplified example of the grouping. It should be noted that the number of wireless access points in an actual network may be higher than shown in FIG. 2.

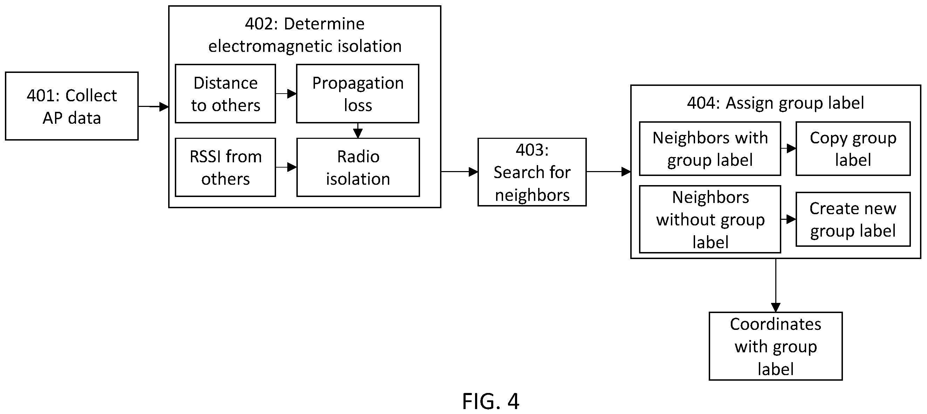

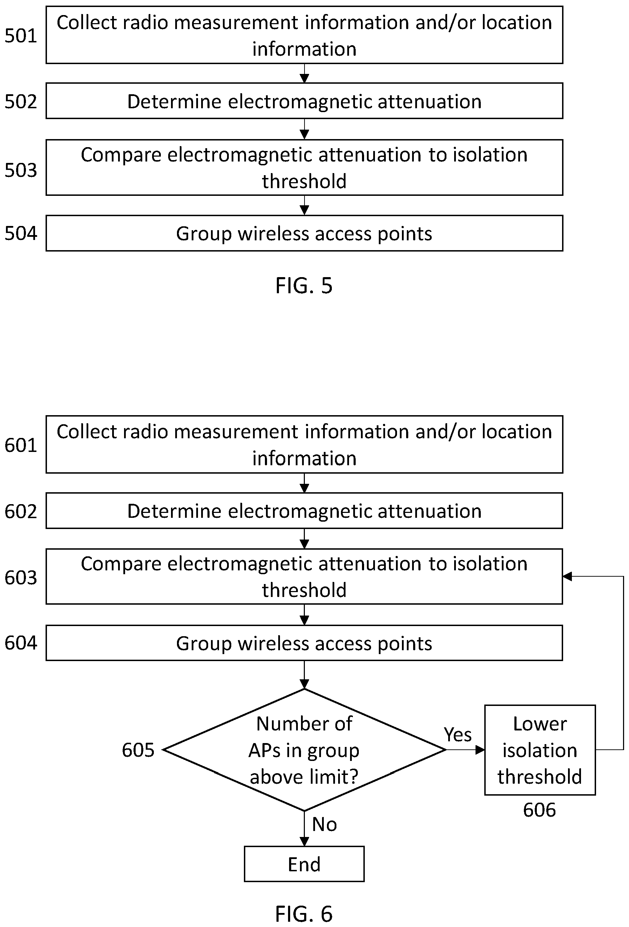

FIG. 2 shows a wireless network comprising a plurality of wireless access points 201, 202, 203, 204, 205, 206, 207, 208, 209, 210, 211, 212. In this example, the wireless access points comprised in the wireless network are grouped into multiple groups 221, 222, 223, 224. Each group 221, 222, 223, 224 may comprise one or more wireless access points. The groups 221, 222, 223, 224 may be determined by comparing the electromagnetic attenuation between each pair of access points to a pre-defined isolation threshold, as described below with reference to FIG. 4 or FIG. 5.

FIG. 3 illustrates a simplified example of the subgrouping (subclustering). In this example, the wireless access points 201, 202, 203, 204, 205 from the first group 221 of FIG. 2 are split into two subgroups 331, 332. Each subgroup 331, 332 may comprise one or more wireless access points 201, 202, 203, 204, 205. The subgroups 331, 332 may be determined by reducing the pre-defined isolation threshold, as described below with reference to FIG. 6.

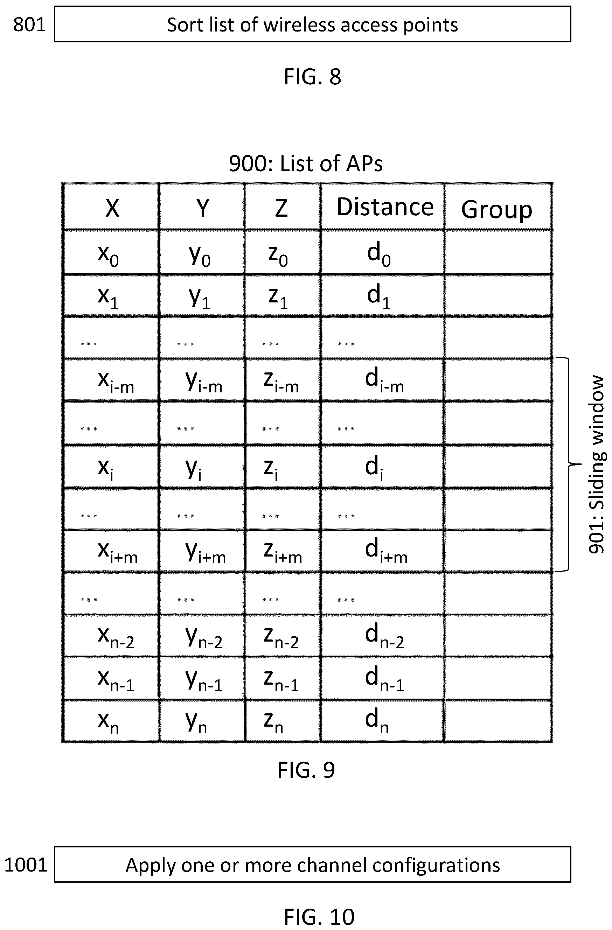

FIG. 4 illustrates a block diagram according to an example embodiment. Referring to FIG. 4, in block 401, data is collected from a plurality of wireless access points comprised in a wireless network. The plurality of wireless access points may refer to access points that belong to a certain communications service provider (CSP). In other words, the plurality of wireless access points may belong to the same CSP. For example, the plurality of wireless access points may be represented as a list of wireless access points (e.g., see FIG. 9).

The collected data comprises at least one of: radio measurement information or location information associated with the plurality of wireless access points.

The radio measurement information may comprise or indicate a received signal strength of a signal received by each wireless access point from one or more other wireless access points. In other words, the radio measurement information may comprise detailed information such as the neighboring APs seen with their respective signal strength. The received signal strength may be indicated as a received signal strength indicator (RSSI) value, for example.

The location information may comprise two-dimensional (latitude, longitude) or three-dimensional (latitude, longitude, altitude) location coordinates of each wireless access point of the plurality of wireless access points.

In block 402, the electromagnetic attenuation level between a given pair of wireless access points (e.g., between an AP without a group label and the rest of the APs in the list) is determined. Electromagnetic attenuation refers to the gradual reduction in the intensity of an electromagnetic wave as it travels through a medium. This reduction may occur due to several factors, including absorption, scattering, and/or reflection.

The electromagnetic attenuation level may be derived directly from the received signal strength reported by the APs (when available). Alternatively, the electromagnetic attenuation level may be derived from the distance between APs, by applying a radio propagation model that determines the electromagnetic attenuation as a function of the distance. When both the distance and the signal strength are available, any one of them may be used or the average between them.

In indoor areas, radio waves may propagate or attenuate differently depending on the specific building materials and structures. Thus, the propagation model may take into account the propagation effects of different building materials and the geometry of the building (statistically in the area of clustering), for example as defined in "Recommendation ITU-R P.2040-3 (08/2023) P Series: Radiowave propagation Effects of building materials and structures on radiowave propagation above about 100 MHz".

For example, two APs with nearly the same two-dimensional location coordinates (latitude, longitude) may be separated by several floors in a building. However, the propagation model can be used to take into account the difference in altitude or height between these two APs, as well as the building materials between the APs.

In block 403, the neighboring APs of a given AP are determined. Once the electromagnetic attenuation level is determined, those pairs of APs that are below a pre-defined isolation threshold may be considered as neighbors, which can be used to determine the group label. Herein a group label refers to an identifier (e.g., a numerical value or a letter) that indicates a group to which a given wireless access point has been assigned.

The pre-defined isolation threshold indicates a level of electromagnetic attenuation above which a given pair of wireless access points is considered to be electromagnetically isolated from each other. For example, the pre-defined isolation threshold may be less than or equal to 100 decibels. At 100 decibels, the isolation is so high that there is no interaction foreseeable.

With respect to the list of wireless access points to find the neighboring APs, the list may be a complete list of APs from the wireless network, or a limited list comprising just a subset of APs from the wireless network. A limited list may be obtained, for example, by selecting only the APs that are below a certain distance to the AP considered for the grouping. This distance could be, for instance, one kilometer, because no AP further than one kilometer away will be detected as a neighbor.

In block 404, to assign the group label to a given AP, it is first checked if any of the neighboring APs of the given AP already has a group label. If the neighboring AP(s) already have a group label, then that group label may be copied to the given AP. If none of the neighboring APs have a group label yet, then a new group label may be created, for instance by a numeric increment, and assigned to the given AP and to the neighboring APs. If no neighboring APs are above the pre-defined isolation threshold, then a new group label may be created, for instance by a numeric increment, and assigned to the given AP.

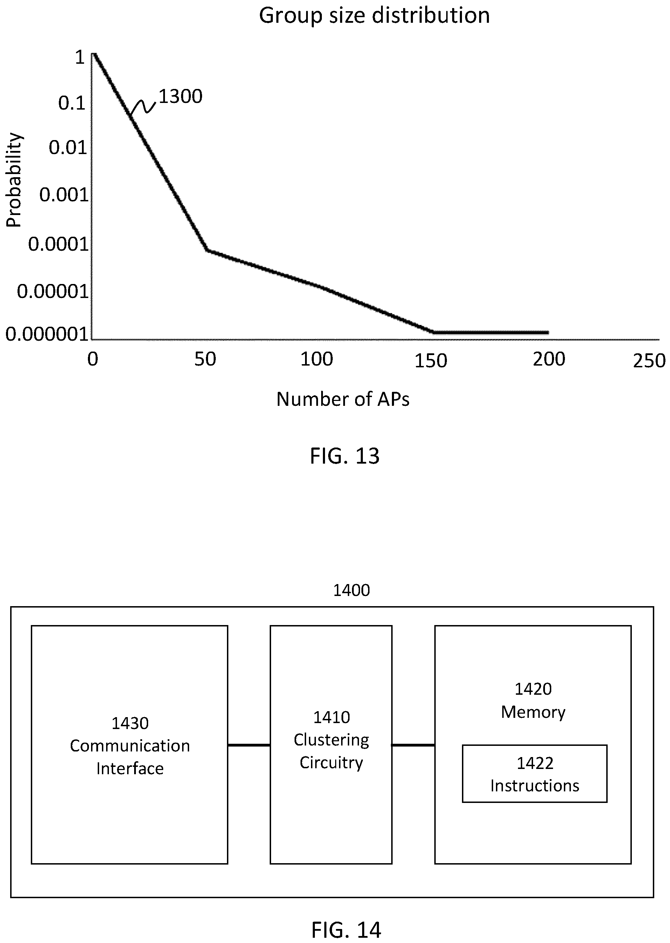

FIG. 5 illustrates a flow chart according to an example embodiment of a method (e.g., a computer-implemented method) for controlling a wireless network. The method of FIG. 5 may be performed in a cloud computing platform 120 or by an apparatus 1400 depicted in FIG. 14. For example, the apparatus 1400 may be, or comprise, or be comprised, a cloud server or any other computing device.

Referring to FIG. 5, in block 501, at least one of the following is collected: radio measurement information or location information associated with a plurality of wireless access points comprised in the wireless network (e.g., the wireless access points 201, 202, 203, 204, 205, 206, 207, 208, 209, 210, 211, 212). The radio measurement information and/or the location information may be collected from the plurality of wireless access points.

In block 502, per pair of wireless access points from the plurality of wireless access points, an electromagnetic attenuation (level) between the pair of wireless access points is determined. In other words, the electromagnetic attenuation may be determined for each pair of wireless access points in the plurality of wireless access points. The determination is based on the at least one of: the radio measurement information or the location information.

For example, the electromagnetic attenuation may be determined based at least on a received signal strength of a signal received by a given wireless access point of the pair of wireless access points from another wireless access point of the pair of wireless access points. The received signal strength may be indicated in the radio measurement information.

Alternatively, or additionally, the electromagnetic attenuation may be determined based at least on a distance between the pair of wireless access points by using a radio propagation model configured to determine the electromagnetic attenuation as a function of the distance. The distance may be indicated by the location information (or determined based on the location information).

In block 503, per pair of wireless access points from the plurality of wireless access points, the electromagnetic attenuation between the pair of wireless access points is compared to a pre-defined isolation threshold. The pre-defined isolation threshold may also be referred to as an initial isolation threshold or an attenuation threshold.

The pre-defined isolation threshold indicates a level of electromagnetic attenuation above which the pair of wireless access points is considered to be electromagnetically isolated from each other. For example, the pre-defined isolation threshold may be less than or equal to 100 decibels.

In block 504, the plurality of wireless access points is grouped into one or more groups (e.g., the groups 221, 222, 223, 224) based on the comparison and based on the pre-defined isolation threshold, such that the one or more groups are considered to be electromagnetically isolated from each other. However, the wireless access points within the same group may not be electromagnetically isolated from each other.

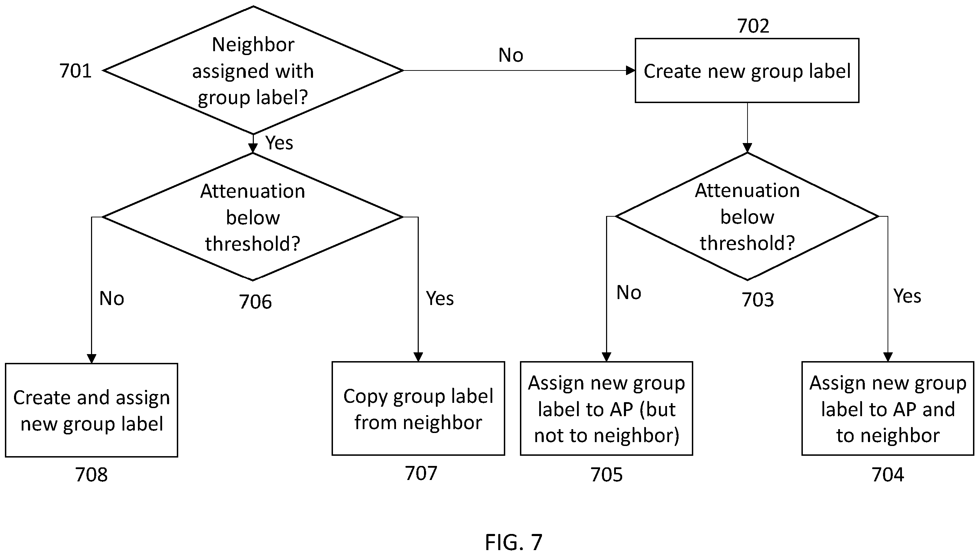

For example, as shown in FIG. 7, the grouping may comprise assigning a group label to a wireless access point (or to each wireless access point) of the plurality of wireless access points based on the comparison of the electromagnetic attenuation to the pre-defined isolation threshold. Herein a group label indicates a group to which a given wireless access point has been assigned.

One or more channel configurations may be applied to one or more wireless access points of at least one group from the one or more groups. In this way, the one or more channel configurations may be applied to a given group without substantially degrading the performance of other groups.

FIG. 6 illustrates a flow chart according to an example embodiment of a method (e.g., a computer-implemented method) for controlling a wireless network. The method of FIG. 6 may be performed in a cloud computing platform 120 or by an apparatus 1400 depicted in FIG. 14. For example, the apparatus 1400 may be, or comprise, or be comprised, a cloud server or any other computing device.

Referring to FIG. 6, in block 601, at least one of the following is collected: radio measurement information or location information associated with a plurality of wireless access points comprised in the wireless network (e.g., the wireless access points 201, 202, 203, 204, 205, 206, 207, 208, 209, 210, 211, 212). The radio measurement information and/or the location information may be collected from the plurality of wireless access points.

In block 602, per pair of wireless access points from the plurality of wireless access points, an electromagnetic attenuation (level) between the pair of wireless access points is determined. In other words, the electromagnetic attenuation may be determined for each pair of wireless access points in the plurality of wireless access points. The determination is based on the at least one of: the radio measurement information or the location information.

For example, the electromagnetic attenuation may be determined based at least on a received signal strength of a signal received by a wireless access point of the pair of wireless access points from another wireless access point of the pair of wireless access points. The received signal strength may be indicated in the radio measurement information.

Alternatively, or additionally, the electromagnetic attenuation may be determined based at least on a distance between the pair of wireless access points by using a radio propagation model configured to determine the electromagnetic attenuation as a function of the distance. The distance may be indicated by the location information.

In block 603, per pair of wireless access points from the plurality of wireless access points, the electromagnetic attenuation between the pair of wireless access points is compared to a pre-defined isolation threshold.

The pre-defined isolation threshold indicates a level of electromagnetic attenuation above which the pair of wireless access points is considered to be electromagnetically isolated from each other. For example, the pre-defined isolation threshold may be less than or equal to 100 decibels.

In block 604, the plurality of wireless access points are grouped into one or more groups (e.g., the groups 221, 222, 223, 224) based on the comparison and based on the pre-defined isolation threshold, such that the one or more groups are considered to be electromagnetically isolated from each other. However, the wireless access points within the same group may not be electromagnetically isolated from each other.

For example, as shown in FIG. 7, the grouping may comprise assigning a group label to a wireless access point (or to each wireless access point) of the plurality of wireless access points based on the comparison of the electromagnetic attenuation to the pre-defined isolation threshold.

In block 605, it is determined whether a number of wireless access points in a given group of wireless access points from the one or more groups exceeds a pre-defined limit. In other words, it is determined whether the group size is too large (the group size is defined by the number of APs in the group). For example, the pre-defined limit may be greater than or equal to 100 wireless access points. As another example, the pre-defined limit may be greater than or equal to 500 wireless access points.

In block 606, based on determining that the number of wireless access points in the group exceeds the pre-defined limit (block 605: yes), the pre-defined isolation threshold is lowered or reduced (e.g., by a pre-defined increment). For example, if the pre-defined isolation threshold is initially set to a value of 100 decibels, and the pre-defined increment is 10 decibels, then the pre-defined isolation threshold may be lowered to 90 decibels (100 decibels - 10 decibels = 90 decibels).

Following block 606, the process returns to block 603, such that the comparing of block 603 and the grouping of block 604 are repeated with the lowered isolation threshold for splitting the group of wireless access points into two or more subgroups. In other words, the comparing (block 603) and the grouping (block 604) are repeated for splitting the group (e.g., group 221) into two or more subgroups (e.g., subgroups 331, 332) by lowering the pre-defined isolation threshold. This procedure may be referred to as subgrouping or subclustering herein. The subgrouping may be performed only for the group(s) in which the number of wireless access points is above the pre-defined limit (instead of regrouping all the APs in the plurality of wireless access points as in the first iteration of block 604).

The groups and subgroups are hierarchical. This means that the subgroups always belong to the same parent group. In other words, if the isolation threshold is reduced, then the resulting subgroups are subsets of the parent group obtained with the higher isolation threshold. Similarly, successive reductions in the isolation threshold will produce smaller subgroups that belong to the previous groups with higher isolation. This is something that does not happen in other clustering techniques such as k-means.

The lowering of the pre-defined isolation threshold may be restricted by a minimum isolation threshold for preventing the pre-defined isolation threshold from being lowered below the minimum isolation threshold. For example, the minimum isolation threshold may be greater than or equal to 80 decibels (dB). Going below 80 dB isolation may not ensure proper isolation in all cases, and thus it may not be advisable to go below it, no matter how large the group is.

In other words, the comparing of block 603 and the grouping of block 604 may be repeated by lowering the pre-defined isolation threshold until the number of wireless access points in each subgroup is below or equal to the pre-defined limit, or until the minimum isolation threshold is reached. Thus, the objective of the subclustering may be to find a tradeoff between the isolation and the interaction or group size.

FIG. 7 illustrates a flow chart according to an example embodiment of a method (e.g., a computer-implemented method) for assigning a group label to a wireless access point (e.g., in block 504 of FIG. 5, or in block 604 of FIG. 6). The method of FIG. 7 may be performed in a cloud computing platform 120 or by an apparatus 1400 depicted in FIG. 14. For example, the apparatus 1400 may be, or comprise, or be comprised, a cloud server or any other computing device.

Referring to FIG. 7, in block 701, it is determined whether one or more neighboring wireless access points of the wireless access point have been assigned with a group label. Herein a group label indicates a group to which a given wireless access point has been assigned.

In block 702, a new group label is created (e.g., by a numeric increment) based on determining that the one or more neighboring wireless access points have not been assigned with a group label (block 701: no).

In block 703, following block 702, it is determined whether the electromagnetic attenuation between the wireless access point and the one or more neighboring wireless access points is below the pre-defined isolation threshold.

In block 704, the new group label is assigned to the wireless access point and to the one or more neighboring wireless access points, based on determining that the electromagnetic attenuation between the wireless access point and the one or more neighboring wireless access points is below the pre-defined isolation threshold (block 703: yes). In other words, in case all the neighboring AP(s) below the isolation threshold are without a group label, then a new group label is created and assigned to the AP and to the neighboring AP(s). In this case, the wireless access point and the one or more neighboring wireless access points are assigned to the same group.

Alternatively, in block 705, the new group label is assigned to the wireless access point (but not to the one or more neighboring wireless access points), based on determining that the electromagnetic attenuation between the wireless access point and the one or more neighboring wireless access points is not below the pre-defined isolation threshold (block 703: no). In other words, in this case, the wireless access point is assigned to a separate group from the one or more neighboring wireless access points.

Alternatively, in block 706, based on determining that the one or more neighboring wireless access points have been assigned with a group label (block 701: yes), it is determined whether the electromagnetic attenuation between the wireless access point and the one or more neighboring wireless access points is below the pre-defined isolation threshold.

In block 707, the group label of the one or more neighboring wireless access points is assigned or copied to the wireless access point, based on determining that the one or more neighboring wireless access points have been assigned with the group label (block 701: yes), and based on determining that the electromagnetic attenuation between the wireless access point and the one or more neighboring wireless access points is below the pre-defined isolation threshold (block 706: yes). In other words, the cluster label is copied from a neighboring AP with electromagnetic attenuation below the isolation threshold. In this case, the wireless access point and the one or more neighboring wireless access points are assigned to the same group.

Alternatively, in block 708, a new group label is created (e.g., by a numeric increment) for the wireless access point, based on determining that the electromagnetic attenuation between the wireless access point and the one or more neighboring wireless access points is not below the pre-defined isolation threshold (block 706: no). In other words, in case none of the neighboring AP(s) is below the isolation threshold, then a new group label is created. The new group label is assigned to the wireless access point (i.e., the wireless access point is assigned to a different group than the one or more neighboring wireless access points).

FIG. 8 illustrates a flow chart according to an example embodiment of a method (e.g., a computer-implemented method) for sorting a list of wireless access points. The method of FIG. 8 may be performed in a cloud computing platform 120 or by an apparatus 1400 depicted in FIG. 14. For example, the apparatus 1400 may be, or comprise, or be comprised, a cloud server or any other computing device.

The method of FIG. 8 may be performed, for example, between block 501 and block 502 of FIG. 5, or between block 601 and block 602 of FIG. 6.

In this example embodiment, the plurality of wireless access points is represented as a list of wireless access points.

Referring to FIG. 8, in block 801, the list of wireless access points is sorted in ascending or descending order of distance from a pre-defined geographic point for the grouping.

FIG. 9 illustrates an example of a list 900 of wireless access points. In this example, the list 900 indicates the location coordinates (x, y and z coordinates) of each access point, and the distance of each access point from a pre-defined geographic point.

As explained above with reference to FIG. 8, the list 900 of wireless access points may be sorted in ascending or descending order of distance with respect to a geographic point (e.g., the origin). The grouping may be started from the first access point in the list, and a sliding window 901 may be used that searches the neighboring APs of a given AP only on a limited number of elements in the list 900 (e.g., before and after the given AP) to assign a group. By using this sliding window approach, the speed of the grouping may be significantly increased (e.g., by a factor of four) in comparison to searching for the neighboring APs from the complete list.

In other words, the grouping of block 504 or block 604 may comprise applying a sliding window 901 to the list 900 for limiting a number of wireless access points considered for each group to a pre-defined number of nearest neighboring wireless access points.

For example, let us assume that there are n APs in the list 900, and the sliding window 901 consists of 2m elements (or APs), and *d*₀ *< d*₁ ... *dᵢ₋ₘ* ... *< dᵢ* ... < d_{*i*+*m*}... < *dₙ*-2 ... < *dₙ*-1 < *dₙ*

In case d is the distance to the origin, ${d}_{i} = \sqrt{{x}_{i}^{2} + {y}_{i}^{2} + {z}_{i}^{2}}$

Alternatively, ${d}_{i}^{2} = {x}_{i}^{2} + {y}_{i}^{2} + {z}_{i}^{2}$ could be used for the sorting.

The speed increase is based on limiting the number of distance comparisons to a reduced number of items contained within the sliding window 901 of size 2m, as shown in FIG. 9. To avoid anomalies in the upper and lower limits of the list 900, the sliding window may be reduced to size m for the first and last AP on the list. The sliding window range for the i^{th} element may be defined, for example, as:
*Wi* = (max{0, i - m}, min {n, i - m})

FIG. 10 illustrates a flow chart according to an example embodiment of a method (e.g., a computer-implemented method) for applying one or more channel configurations. The method of FIG. 10 may be performed by a cloud computing platform 120 or by an apparatus 1400 depicted in FIG. 14. For example, the apparatus 1400 may be, or comprise, or be comprised, a cloud server or any other computing device.

The method of FIG. 10 may be performed, for example, after the subgrouping of FIG. 6 is completed.

Referring to FIG. 10, in block 1001, one or more channel configurations are applied to one or more wireless access points of at least one subgroup from the two or more subgroups. In this way, the one or more channel configurations may be applied to a given group or subgroup without substantially degrading the performance of other groups or subgroups.

A channel configuration refers to the specific settings and parameters assigned to a wireless communication channel used by wireless access point(s) within the wireless network. For example, the channel configuration may indicate the channel frequency, bandwidth, and possibly other related settings to optimize network performance and minimize interference. Proper channel configuration helps to ensure efficient use of the available spectrum, reduces congestion, and improves overall network reliability and speed.

The blocks and related functions described above by means of FIGS. 5, 6, 7, 8, and 10 are in no absolute chronological order, and some of them may be performed simultaneously or in an order differing from the described one. Other functions can also be executed between them or within them, and/or other rules applied. Some of the blocks or part of the blocks can also be left out or replaced by a corresponding block or part of the block.

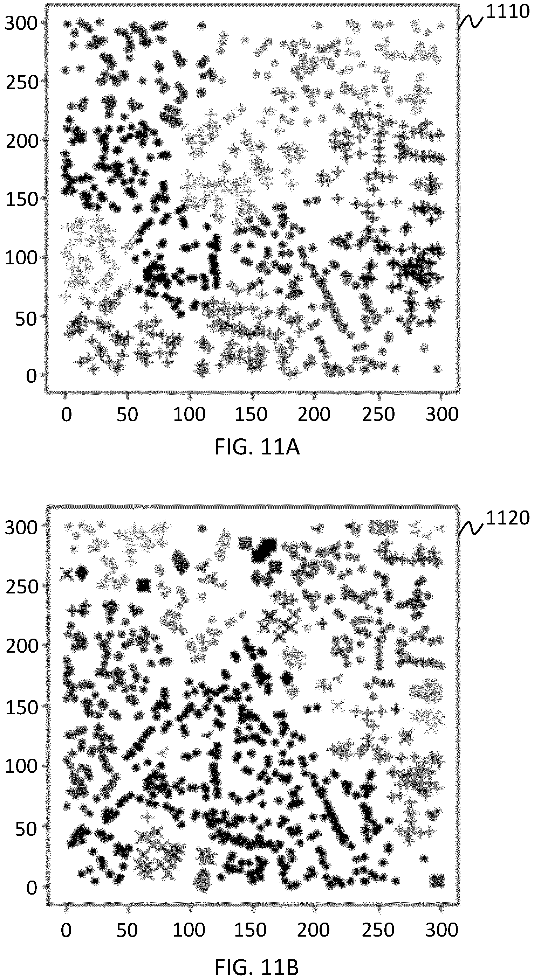

FIG. 11A illustrates an example of a grouping 1110 of wireless access points achieved with k-means. In this example, 1067 APs may be grouped into 13 groups. Each group is represented by a different icon in FIG. 11A (i.e., APs belonging to the same group are represented by the same type of icon).

FIG. 11B illustrates an example of a grouping 1120 achieved by an example embodiment with an isolation threshold of 102 decibels (dB) to minimize electromagnetic interaction between the groups, so that they can be treated independently. In this example, the number of groups is higher than achieved with k-means (in FIG. 11B, half of the groups comprise three APs or less). Each group is represented by a different icon in FIG. 11B (i.e., APs belonging to the same group are represented by the same type of icon).

Both of these grouping examples are based on two dimensional groups based on (x, y) coordinates. By comparing FIG. 11A and FIG. 11B, the differences between the grouping techniques can be observed. k-means (see FIG. 11A) produces a rather uniform set of groups both in terms of quantity of elements and geographical extension. On the other hand, the grouping shown in FIG. 11B has several properties to be taken into account.

Firstly, the 102 dB isolation is ensured in such a way that APs in one group do not see any single AP from other groups with an isolation below that value.

Secondly, if there are, for example, three nodes (i.e., APs) in the network, such that node A sees node B below the isolation threshold, and B sees C also below said isolation threshold, but nodes A and C do not see each other, then the three nodes A, B and C belong to the same group.

Thirdly, the groups may be of different sizes and geographic extensions.

As a fourth point, the groups may be multicavity and concentric, i.e. there may be groups that surround other groups.

As a fifth point, there may be some APs that are independent, i.e., do not belong to other groups or are extremely small groups. In this case, a single AP may form one group.

As a sixth point, larger groups may be divided into smaller subgroups with the same properties by changing (reducing) the isolation threshold.

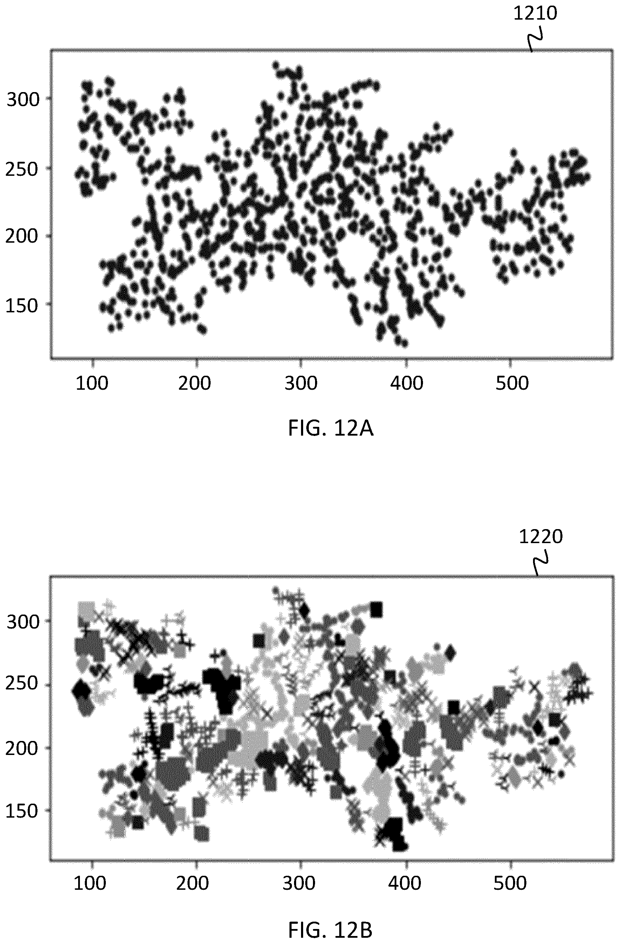

FIG. 12A illustrates an example of a large initial group 1210 of APs (e.g., comprising 1151 wireless access points resulting from an isolation threshold of 90 decibels).

FIG. 12B illustrates an example of subclustering 1220 for splitting the large group 1210 of APs of FIG. 12A into smaller subgroups. Each subgroup is illustrated by a different icon in FIG. 12B (i.e., APs belonging to the same subgroup are represented by the same type of icon).

Since the size of the groups cannot be set in advance, it may happen that some groups result in a relatively large size (in terms of the number of elements or APs) for a given isolation threshold setting. To overcome this effect and for instance treat the group in a more computationally efficient manner, the group can be reduced to smaller subgroups by relaxing the isolation threshold.

For example, by reducing the isolation threshold from 90 decibels to 80 decibels, the larger group of 1151 APs may be split into 131 isolated APs and 79 subgroups of two or more APs (i.e., 131 + 79 = 210 subgroups in total).

Another use case for the subclustering is to split part of the processing into subgroups and keep some parts of the process with the larger cluster. This may speed up processing in certain cases, keeping the fundamental processing since the sub clusters' properties are inherited from the larger cluster.

FIG. 13 illustrates a sample statistical distribution 1300 of group sizes (cluster sizes) in a wireless network. With respect to the group size, it should be noted that, isolation-wise, there may be many very small clusters. Depending on the group size, there may be different optimization techniques applicable.

As shown in FIG. 13, the group sizes decrease in probability as the size (number of APs) increases, with the most probable outcome being that a group is just a single isolated AP. This is an advantage because it allows to identify and treat isolated APs in a simplified approach compared to having them in geographical clusters.

With the subgrouping (subclustering), larger groups can be divided into smaller subgroups by applying the same grouping technique and just changing the isolation threshold to a lower one. Contrary to other grouping techniques, this subgrouping is completely consistent with the initial grouping (i.e., applying a less restrictive isolation will produce additional groups), but the subgroups will not capture APs from other larger groups that are more restrictive. This is not possible in k-means and other similar techniques, since they are based on the use of some form of centroids. In these other techniques, when the group sizes are reduced, they will be completely reconfigured, even capturing elements from other larger clusters.

FIG. 14 illustrates an example of an apparatus 1400 comprising means for performing one or more of the example embodiments (e.g., the method of any of FIGS. 5, 6, 7, 8, and/or 10) described above. For example, the apparatus 1400 may be, or comprise, or be comprised, a cloud server or any other computing device.

The apparatus 1400 may comprise, for example, a circuitry or a chipset applicable for realizing one or more of the example embodiments described above. The apparatus 1400 may be an electronic device or computing system comprising one or more electronic circuitries. The apparatus 1400 may comprise a clustering circuitry 1410 such as at least one processor, and at least one memory 1420 storing instructions 1422 which, when executed by the at least one processor, cause the apparatus 1400 to carry out one or more of the example embodiments described above. Such instructions 1422 may, for example, include computer program code (software). The at least one processor and the at least one memory storing the instructions may provide the means for providing or causing the performance of any of the methods and/or blocks described above.

The processor is coupled to the memory 1420. The processor is configured to read and write data to and from the memory 1420. The memory 1420 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1420 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1420 or, alternatively or additionally, they may be received, by the apparatus, via an electromagnetic carrier signal and/or may be copied from a physical entity such as a computer program product. Execution of the computer readable instructions causes the apparatus 1400 to perform one or more of the functionalities described above.

The memory 1420 may be implemented using any suitable data storage technology, such as semiconductor-based memory devices, flash memory, magnetic memory devices and systems, optical memory devices and systems, fixed memory and/or removable memory.

The apparatus 1400 may further comprise or be connected to a communication interface 1430 comprising hardware and/or software for realizing communication connectivity according to one or more communication protocols. The communication interface 1430 may comprise at least one transmitter (Tx) and at least one receiver (Rx) that may be integrated to the apparatus 1400 or that the apparatus 1400 may be connected to. The communication interface 1430 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1430 provides the apparatus with communication capabilities to communicate with the wireless network. The communication interface 1430 may, for example, provide a radio, cable or fiber interface to one or more access points of the wireless network.

It is to be noted that the apparatus 1400 may further comprise various components not illustrated in FIG. 14. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be graspable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. A computer-implemented method for controlling a wireless network, the computer-implemented method comprising:
collecting (501, 601) at least one of: radio measurement information or location information associated with a plurality of wireless access points (201, 202, 203, 204, 205, 206, 207, 208, 209, 210, 211, 212) comprised in the wireless network;
determining (502, 602), per pair of wireless access points from the plurality of wireless access points (201, 202, 203, 204, 205, 206, 207, 208, 209, 210, 211, 212), an electromagnetic attenuation between the pair of wireless access points,
wherein the determination is based on the at least one of: the radio measurement information or the location information;
comparing (503, 603), per pair of wireless access points from the plurality of wireless access points (201, 202, 203, 204, 205, 206, 207, 208, 209, 210, 211, 212), the electromagnetic attenuation between the pair of wireless access points to a pre-defined isolation threshold,
wherein the pre-defined isolation threshold indicates a level of electromagnetic attenuation above which the pair of wireless access points is considered to be electromagnetically isolated from each other;
grouping (504, 604) the plurality of wireless access points (201, 202, 203, 204, 205, 206, 207, 208, 209, 210, 211, 212) into one or more groups (221, 222, 223, 224) based on the comparison and based on the pre-defined isolation threshold;
determining (605) whether a number of wireless access points in a group (221) of wireless access points from the one or more groups (221, 222, 223, 224) exceeds a pre-defined limit; and
based on determining that the number of wireless access points in the group (221) exceeds the pre-defined limit,
repeating the comparing (603) and the grouping (604) for splitting the group (221) into two or more subgroups (331, 332) by lowering (606) the pre-defined isolation threshold.

2. The computer-implemented method of claim 1, wherein the electromagnetic attenuation is determined based at least on a received signal strength of a signal received by a wireless access point of the pair of wireless access points from another wireless access point of the pair of wireless access points,
wherein the received signal strength is indicated in the radio measurement information.

3. The computer-implemented method of claim 1 or 2, wherein the electromagnetic attenuation is determined based at least on a distance between the pair of wireless access points by using a radio propagation model configured to determine the electromagnetic attenuation as a function of the distance,
wherein the distance is indicated by the location information.

4. The computer-implemented method of any preceding claim, wherein the grouping comprises:
assigning (704, 705, 707, 708) a group label to a wireless access point of the plurality of wireless access points (201, 202, 203, 204, 205, 206, 207, 208, 209, 210, 211, 212) based on the comparison of the electromagnetic attenuation to the pre-defined isolation threshold.

5. The computer-implemented method of claim 4, wherein the assignment (704, 705, 707, 708) of the group label comprises:
determining (701) whether one or more neighboring wireless access points of the wireless access point have been assigned with a group label; and
assigning (707) the group label of the one or more neighboring wireless access points to the wireless access point, based on determining that the one or more neighboring wireless access points have been assigned with the group label, and based on the electromagnetic attenuation between the wireless access point and the one or more neighboring wireless access points being below the pre-defined isolation threshold.

6. The computer-implemented method of claim 4, wherein the assignment (704, 705, 707, 708) of the group label comprises:
determining (701) whether one or more neighboring wireless access points of the wireless access point have been assigned with a group label;
creating (702) a new group label based on determining that the one or more neighboring wireless access points have not been assigned with the group label; and
assigning (704) the new group label to the wireless access point and to the one or more neighboring wireless access points, based on the electromagnetic attenuation between the wireless access point and the one or more neighboring wireless access points being below the pre-defined isolation threshold.

7. The computer-implemented method of claim 4, wherein the assignment of the group label comprises:
determining (706) whether the electromagnetic attenuation between the wireless access point and one or more neighboring wireless access points is below the pre-defined isolation threshold;
creating (708) a new group label for the wireless access point, based on determining that the electromagnetic attenuation between the wireless access point and the one or more neighboring wireless access points is not below the pre-defined isolation threshold; and
assigning (708) the new group label to the wireless access point.

8. The computer-implemented method of any preceding claim, wherein the plurality of wireless access points (201, 202, 203, 204, 205, 206, 207, 208, 209, 210, 211, 212) is represented as a list (900) of wireless access points,
wherein the computer-implemented method further comprises:
sorting (801) the list (900) of wireless access points in ascending or descending order of distance from a pre-defined geographic point for the grouping.

9. The computer-implemented method of claim 8, wherein the grouping (504, 604) comprises applying a sliding window (901) to the list (900) for limiting a number of wireless access points considered for each group (221, 222, 223, 224) to a pre-defined number of nearest neighboring wireless access points.

10. The computer-implemented method of any preceding claim, wherein the pre-defined isolation threshold is less than or equal to 100 decibels.

11. The computer-implemented method of any preceding claim, wherein the lowering (606) of the pre-defined isolation threshold is restricted by a minimum isolation threshold for preventing the pre-defined isolation threshold from being lowered below the minimum isolation threshold,
wherein the minimum isolation threshold is greater than or equal to 80 decibels.

12. The computer-implemented method of any preceding claim, wherein the pre-defined limit is greater than or equal to 100 wireless access points.

13. The computer-implemented method of any preceding claim, further comprising:
applying (1001) one or more channel configurations to one or more wireless access points (204, 205) of at least one subgroup (332) from the two or more subgroups (331, 332).

14. An apparatus (1400) comprising at least one processor (1410), and at least one memory (1420) storing instructions (1422) that, when executed by the at least one processor (1410), cause the apparatus (1400) at least to:
collect at least one of: radio measurement information or location information associated with a plurality of wireless access points (201, 202, 203, 204, 205, 206, 207, 208, 209, 210, 211, 212) comprised in the wireless network;
determine, per pair of wireless access points from the plurality of wireless access points (201, 202, 203, 204, 205, 206, 207, 208, 209, 210, 211, 212), an electromagnetic attenuation between the pair of wireless access points,
wherein the determination is based on the at least one of: the radio measurement information or the location information;
compare, per pair of wireless access points from the plurality of wireless access points (201, 202, 203, 204, 205, 206, 207, 208, 209, 210, 211, 212), the electromagnetic attenuation between the pair of wireless access points to a pre-defined isolation threshold,
wherein the pre-defined isolation threshold indicates a level of electromagnetic attenuation above which the pair of wireless access points is considered to be electromagnetically isolated from each other;
group the plurality of wireless access points (201, 202, 203, 204, 205, 206, 207, 208, 209, 210, 211, 212) into one or more groups (221, 222, 223, 224) based on the comparison and based on the pre-defined isolation threshold;
determine whether a number of wireless access points in a group (221) of wireless access points from the one or more groups (221, 222, 223, 224) exceeds a pre-defined limit; and
based on determining that the number of wireless access points in the group (221) exceeds the pre-defined limit,
repeat the comparing and the grouping for splitting the group (221) into two or more subgroups (331, 332) by lowering the pre-defined isolation threshold.

15. A computer program comprising instructions for performing at least the following:
collecting at least one of: radio measurement information or location information associated with a plurality of wireless access points (201, 202, 203, 204, 205, 206, 207, 208, 209, 210, 211, 212) comprised in the wireless network;
determining, per pair of wireless access points from the plurality of wireless access points (201, 202, 203, 204, 205, 206, 207, 208, 209, 210, 211, 212), an electromagnetic attenuation between the pair of wireless access points,
wherein the determination is based on the at least one of: the radio measurement information or the location information;
comparing, per pair of wireless access points from the plurality of wireless access points (201, 202, 203, 204, 205, 206, 207, 208, 209, 210, 211, 212), the electromagnetic attenuation between the pair of wireless access points to a pre-defined isolation threshold,
wherein the pre-defined isolation threshold indicates a level of electromagnetic attenuation above which the pair of wireless access points is considered to be electromagnetically isolated from each other;
grouping the plurality of wireless access points (201, 202, 203, 204, 205, 206, 207, 208, 209, 210, 211, 212) into one or more groups (221, 222, 223, 224) based on the comparison and based on the pre-defined isolation threshold;
determining whether a number of wireless access points in a group (221) of wireless access points from the one or more groups (221, 222, 223, 224) exceeds a pre-defined limit; and
based on determining that the number of wireless access points in the group (221) exceeds the pre-defined limit,
repeating the comparing and the grouping for splitting the group (221) into two or more subgroups (331, 332) by lowering the pre-defined isolation threshold.
